# EUROPÄISCHE PATENTSCHRIFT

(11) **EP 3 866 937 B1**
(45) Veröffentlichungstag und Bekanntmachung des Hinweises auf die Patenterteilung: **31.08.2022**
(21) Anmeldenummer: 19787176.7
(22) Anmeldetag: 08.10.2019
(51) Int. Cl.: A62C 35/58, A62C 37/08, A62C 37/50

(54) **VERFAHREN ZUR ÜBERWACHUNG DER QUALITÄT VON LÖSCHWASSER IN SPRINKLERANLAGEN SOWIE SPRINKLERKOPF**
METHOD FOR MONITORING THE QUALITY OF FIRE-FIGHTING WATER IN SPRINKLER SYSTEMS, AND SPRINKLER HEAD
PROCÉDÉ POUR CONTRÔLER LA QUALITÉ DE L'EAU D'EXTINCTION DANS DES INSTALLATIONS D'EXTINCTION AUTOMATIQUE À EAU TYPE SPRINKLER ET TÊTE DE SPRINKLER

(30) Priorität: 18.10.2018 DE 102018125861
(43) Veröffentlichungstag der Anmeldung: 25.08.2021
(73) Patentinhaber: JOB Lizenz GmbH, 22926 Ahrensburg (DE)
(72) Erfinder: MÜLLER, Bodo, 25436 Tornesch (DE); KLUG, Rüdiger, 22926 Ahrensburg (DE); TESCHNER, Jürgen, 22339 Hamburg (DE)
(74) Vertreter: Raffay & Fleck
(86) Internationale Anmeldenummer: PCT/EP2019/077199
(87) Internationale Veröffentlichungsnummer: WO 2020/078771

(56) Entgegenhaltungen:
- WO-A1-2013/181596
- WO-A1-2014/182810
- DE-A1-102014 206 228
- DE-C2- 2 539 703

## Beschreibung

Die vorliegende Erfindung betrifft ein Verfahren zur Überwachung der Löschwasserqualität von in einer Sprinkleranlage befindlichem Löschwasser. Sie betrifft ferner einen Sprinklerkopf für eine Sprinkleranlage, der für die Durchführung eines solchen Verfahrens geeignet ist.

Sprinkleranlagen werden heutzutage in diversen, insbesondere in öffentlichen, Gebäuden installiert. Sie dienen dem Brandschutz bzw. der Brandbekämpfung. Sie enthalten typischerweise ein an einer Löschwasserversorgung angeschlossenes Netz aus Löschwasserrohren, von denen Rohrabschnitte mit freien Enden im Bereich einer Gebäudedecke installiert sind und in die Rohrabschnitte Sprinklerköpfe eingesetzt sind. Solche Sprinklerköpfe sind z.B. in der DE 25 39 703 C2 beschrieben. Die Sprinklerköpfe haben thermische Auslöseelemente, die bei Erreichen einer Auslösetemperatur besorgen, dass ein Ventil öffnet und in dem Löschwasserrohr anstehendes Löschwasser durch den Sprinklerkopf freigesetzt wird und austritt. Das Löschwasser steht in dem Netz aus Löschwasserrohren mit einem vorbestimmten Druck an. Die Löschwasserversorgung ist dabei häufig in Form eines Löschwassertanks gebildet, der mit einem vorgegebenen Volumen von Löschwasser befüllt ist. Es gibt aber auch Sprinkleranlagen, bei denen das Netz aus Löschwasserrohren an eine Wasserversorgungsleitung, zum Beispiel von Trink- oder Brauchwasser, angeschlossen ist.

Solche Sprinkleranlagen haben klassischerweise eine überaus lange Standzeit, in der auch das Löschwasser über lange Zeiträume in dem System ohne Austausch steht. Insbesondere dadurch, dass die mit den Sprinklerköpfen versehenen freien Enden von Löschwasserrohren als sackgassenartige Abschnitte gebildet sind, kann eine Zirkulation des Löschwassers nicht, jedenfalls nicht ausreichend bewirkt werden.

Ein bekanntes Problem in derartigen Sprinkleranlagen ist, dass die Qualität des Löschwassers mit der Standzeit leidet, dass darin zum Beispiel Biofilme wachsen oder sich durch eine korrosive Eigenschaft des Löschwassers Korrosionsrückstände und partikulare Verunreinigungen absetzen. Diesem Problem versucht man auf unterschiedliche Arten zu begegnen. So wird gemäß einem in der WO 01/14836 A1 offenbarten Vorschlag das Löschwasserrohrsystem unter Einsatz von antimikrobiell wirkendem Gas sterilisiert, um dem Wachstum von Biofilmen vorzubeugen, die die Rohrquerschnitte der Löschwasserrohre der Sprinkleranlage verengen oder sogar verstopfen und damit die Funktion der Sprinkleranlage im Ernstfall beeinträchtigen, ja sogar außer Kraft setzen, können. Die EP 2 334 384 B1 schlägt vor, durch Einleiten von Stickstoffgas in das Löschwasserrohrsystem dort vorhandenen Sauerstoff zu verdrängen und über ein Auslassventil aus dem System zu befördern, um dadurch Korrosion in dem Leitungssystem vorzubeugen und zu verhindern, dass das Leitungssystem durch derartige Korrosion angegriffen und das in dem Rohrleitungssystem befindliche Löschwasser mit Partikeln oder dergleichen verunreinigt wird, die wiederum die ordnungsgemäße Funktion der Sprinkleranlage im Ernstfall beeinträchtigen oder sogar außer Kraft setzen könnten.

In der DE 10 2014 206 228 A1 ist ein besonderes Löschmedium für elektronische oder elektrische Geräte beschrieben, das sich insbesondere auch durch eine besonders niedrige elektrische Leitfähigkeit auszeichnet, dort ist ein Wert von < 10 *µ*S/cm genannt. Um das Löschmedium in dieser Qualität zu erhalten, wird auch vorgeschlagen, dieses in einem Nebenstrom über einen lonentauscher und ggf. einen Partikelfilter zu führen. Dabei kann, so wird weiterhin ausgeführt, auch eine Überwachung der Leitfähigkeit vorgenommen werden.

Während im Stand der Technik also Maßnahmen beschrieben sind, mit denen das Rohrleitungssystem aus Löschwasserrohren einer Sprinkleranlage behandelt und die Qualität des darin stehenden Löschwassers verbessert werden kann, fehlt es derzeit jedoch an einer praxistauglichen Möglichkeit, die Qualität des in den Löschwasserrohren der Sprinkleranlage befindlichen Löschwassers insbesondere in den besonders sensiblen Bereichen der als Sackgassen ausgebildeten Abschnitte der Löschwasserrohre, an denen die Sprinklerköpfe festgelegt sind, zu überwachen.

Hier soll mit der vorliegenden Erfindung Abhilfe geschaffen werden, indem ein Verfahren angegeben wird, mit dem eine solche Überwachung der Löschwasserqualität von in einer Sprinkleranlage befindlichem Löschwasser möglich ist. Zudem soll mit der Erfindung auch ein Sprinklerkopf für eine Sprinkleranlage angegeben werden, mit dem ein solches Verfahren durchgeführt werden kann.

Gelöst wird diese Aufgabe erfindungsgemäß durch ein Verfahren zur Überwachung der Löschwasserqualität von in einer Sprinkleranlage befindlichem Löschwasser, bei dem eine Messung der elektrischen Leitfähigkeit des in der Sprinkleranlage befindlichen Löschwassers durchgeführt und aus einem gemessenen Leitfähigkeitswert auf eine Qualität und/oder eine Qualitätsveränderung des Löschwassers geschlossen wird.

Im Rahmen von Überlegungen und Untersuchungen, die im Zuge der Suche nach einer Lösung für die vorstehend beschriebenen Aufgabe angestellt wurden, wurde nämlich zunächst erkannt, dass ein wesentlicher Indikator für die Qualität des Löschwassers in einer Sprinkleranlage dessen elektrische Leitfähigkeit ist. Verändert sich die elektrische Leitfähigkeit des Löschwassers in der Sprinkleranlage, so deutet dies auf eine Qualitätsveränderung hin. Typischerweise zeigt eine Erhöhung der elektrischen Leitfähigkeit an, dass das Löschwasser eine erhöhte Korrosionsneigung hat. Eine Verringerung der elektrischen Leitfähigkeit kann auf das Vorhandensein von elektrisch nicht leitenden Partikeln in substantieller Menge in dem Löschwasser schließen lassen. In der Praxis wird also die elektrische Leitfähigkeit des Löschwassers gemessen, insbesondere in zeitlichen Abständen, insbesondere in periodisch vorgegebenen Intervallen, oder auch kontinuierlich, und es wird eine Veränderung des Messwertes für die elektrische Leitfähigkeit als Indikator für eine veränderte Qualität des Löschwassers gesehen. Typischerweise werden hierbei Schwellwerte gesetzt werden, die einen Toleranzbereich bestimmen, innerhalb dessen die Veränderungen der elektrischen Leitfähigkeit noch eine hinnehmbare Qualität des Löschwassers anzeigen, bei deren über- oder unterschreiten jedoch eine solche Veränderung der Qualität des Löschwassers erkannt wird, die ein Einschreiten und weitere Maßnahmen erforderlich machen. Solche Maßnahmen können zum Beispiel in einer Behandlung des Löschwassers und/oder des Löschwasserrohrsystems der Sprinkleranlage bestehen, wie sie im eingangs erläuterten Stand der Technik beschrieben sind. Auch kann zum Beispiel ein Austausch und vollständiger Ersatz des Löschwassers und/oder eine Spülung der Löschwasserrohre der Sprinkleranlage vorgenommen werden.

Wenn vorstehend auf die Messung der elektrischen Leitfähigkeit abgestellt wird, so ist hier klarzustellen, dass selbstverständlich auch eine Messung des elektrischen Widerstandes als analoge Maßnahme erfolgen kann. Bekanntlich stehen elektrischer Widerstand und elektrische Leitfähigkeit in einem festen Verhältnis, ist der elektrische Widerstand proportional zum Kehrwert der elektrischen

Leitfähigkeit. Entsprechend ist ein Wert für den elektrischen Widerstand des Löschwassers ebenso Indikator für die Qualität des Löschwassers, ist also in der erfindungsgemäßen Messung der elektrischen Leitfähigkeit auch die Bestimmung eines elektrischen Widerstands mit eingeschlossen, ohne dass es hierfür der Umrechnung in die elektrische Leitfähigkeit etwa als Voraussetzung bedürfe.

Bei dem erfindungsgemäßen Verfahren wird, und dies zeichnet die Erfindung aus, die Messung der elektrischen Leitfähigkeit des Löschwassers an einem an eine Löschwasserleitung der Sprinkleranlage angeschlossenen Sprinklerkopf durchgeführt. Hierzu ist ein entsprechender Sensor in einem Bereich des Sprinklerkopfs so positioniert, dass er mit dem Löschwasser in Kontakt steht für eine Messung der elektrischen Leitfähigkeit. Diese Vorgehensweise hat den besonderen Vorteil, dass gerade in den kritischen Bereichen, nämlich den als Sackgassen ausgebildeten Abschnitten des Löschwasserrohrleitungsnetzes, an deren Enden die Sprinklerköpfe befestigt sind, lokal die Qualität des dort befindlichen Löschwassers überwacht wird. Insbesondere in diesen Bereichen kommt es nicht zu einer Bewegung des Löschwassers, steht das Löschwasser und wirkt sich eine Qualitätsverschlechterung des Löschwassers besonders gravierend aus. Für die Durchführung des erfindungsgemäßen Verfahrens ist es dabei nicht zwingend erforderlich, die Qualität des Löschwassers im Bereich eines jeden der Sprinklerköpfe durch dort durchgeführte elektrische Leitfähigkeitsmessungen zu bestimmen bzw. zu überwachen. Grundsätzlich kann schon die Messung im Bereich eines der Sprinklerköpfe eine ausreichende Kenntnis über die Qualität des in der Sprinkleranlage befindlichen Löschwassers geben. Wenn allerdings jedoch mehrere an verschiedenen Sprinklerköpfen gelegene Messpunkte eingerichtet sind und an diesen Messpunkten die Leitfähigkeit des Löschwassers und darüber die Qualität desselben bestimmt und nachgehalten wird, ergibt sich eine noch bessere Überwachung des gesamten Systems.

Die Ergebnisse der durchgeführten Messungen für die elektrische Leitfähigkeit, d.h. die aufgenommenen Messwerte repräsentierende Daten, werden typischerweise an eine Zentrale weitergeleitet, in der diese ausgewertet oder von der diese für einer Auswertung weiterverarbeitet und gegebenenfalls noch weiter übermittelt werden. Diese Zentrale kann zum Beispiel eine Steuerung der bzw. eine Überwachungseinrichtung für die Sprinkleranlage sein. Eine Übermittlung an die Zentrale kann insbesondere auch dann erfolgen, wenn die Messung der elektrischen Leitfähigkeit des Löschwassers an einem bzw. im Bereich eines Sprinklerkopf(es) der Sprinkleranlage durchgeführt wird. Eine solche Übermittlung von Daten kann dabei, wenn eine entsprechende Verkabelung möglich und gegeben ist, kabelgebunden stattfinden. Sie kann aber auch, zumindest in einem Übertragungsabschnitt, drahtlos erfolgen.

Ein weiterer Aspekt der Lösung der Aufgabe und damit der Erfindung besteht, wie eingangs bereits erwähnt, in einem besonders gestalteten Sprinklerkopf für eine Sprinkleranlage. Erfindungsgemäß weist dieser Sprinklerkopf einen einen Rohrabschnitt aufweisenden Verbindungsanschluss zum Verbinden mit einem freien Ende eines Löschwasserrohrs der Sprinkleranlage auf. Er hat weiterhin ein Verschlussstück, welches in einer Schließstellung den Rohrabschnitt und/oder das freie Ende des Löschwasserrohrs verschließt, um einen Austritt von Löschwasser aus dem Löschwasserrohr zu verhindern, welches in einer Offenstellung den Rohrabschnitt und das freie Ende des Löschwasserrohrs freigibt, sodass Löschwasser aus dem Löschwasserrohr und durch den Sprinklerkopf austreten kann. Weiterhin hat er ein thermisches Auslöseelement, das in einem Normalzustand das Verschlussstück in der Schließstellung hält, bei einer Auslösetemperatur eine Bewegung des Verschlussstücks in die Offenstellung erlaubt. Insoweit stimmt der erfindungsgemäßen Sprinklerkopf noch mit den üblichen und allgemein bekannten Sprinklerköpfen überein, mit denen der erfindungsgemäße Sprinklerkopf auch in weiteren üblichen Details übereinstimmen kann, zum Beispiel indem ein Verteilerteller vorgesehen ist, zum Verteilen von austretendem Löschwasser in einem um den Sprinklerkopf herum gelegenen Umfeld und dergleichen. Das Besondere an dem erfindungsgemäßen Sprinklerkopf besteht nun darin, dass an diesem in einem Bereich, in dem in einem mit dem freien Ende des Löschwasserrohrs verbundenen Zustand des Sprinklerkopfs Löschwasser ansteht, ein Leitfähigkeitssensor zum Messen der elektrischen Leitfähigkeit des Löschwassers vorgesehen ist.

Ein solcher Sprinklerkopf kann also insbesondere für eine Bestimmung der elektrischen Leitfähigkeit des Löschwassers und damit für eine Überwachung der Qualität des Löschwassers an den besonders sensiblen Enden der im nicht ausgelösten Zustand der Sprinkleranlage als Sackgassen gebildeten Rohranschlüsse verwendet werden, an denen die Sprinklerköpfe der Sprinkleranlage festgelegt sind. Er eignet sich insbesondere auch gut für eine Nachrüstung bestehender Sprinkleranlagen.

Das thermische Auslöseelement eines erfindungsgemäßen Sprinklerkopfs kann prinzipiell beliebig gebildet und aus den üblichen, für derartige Bauteile bekannten thermischen Auslöseelementen gewählt sein. Zu nennen sind hier thermische Auslöseelemente unter Verwendung von einem Schmelzmaterial, wie z.B. Schmelzlot, aber auch thermische Auslöseelement mit Berstkörpern, wie zum Beispiel einem mit einer Auslöseflüssigkeit gefüllten, verschlossenen sogenannten Glasfässchen.

Der erfindungsgemäße Sprinklerkopf kann mit Vorteil eine mit dem Leitfähigkeitssensor verbundene Einrichtung zur drahtlosen Übermittlung von Messwerten des Leitfähigkeitssensors aufweisen. In einer solchen Ausgestaltung ist es nicht erforderlich, den Sprinklerkopf für ein Auslesen der aufgenommenen Messwerte für die elektrische Leitfähigkeit des Löschwassers über Datenkabel anzuschließen.

Mit Vorteil kann der erfindungsgemäße Sprinklerkopf weiterhin eine elektrische Energiequelle aufweisen, zum Beispiel eine Batterie oder einen Akkumulator. Eine solche elektrische Energiequelle kann für die Versorgung des Leitfähigkeitssensors und/oder der Einrichtung zum drahtlosen Übermitteln von Messwerten mit elektrischer Energie verwendet werden, sodass auch unter dem Gesichtspunkt dieser Energieversorgung eine Verkabelung des erfindungsgemäßen Sprinklerkopfes nicht erforderlich ist.

Weiterhin kann der erfindungsgemäße Sprinklerkopf eine Steuereinheit aufweisen, die dazu eingerichtet ist, den Leitfähigkeitssensor zur Durchführung einer Messung der elektrischen Leitfähigkeit des Löschwassers anzusteuern. Diese Steuereinheit kann prinzipiell als eine Art Slave-Einheit fungieren, die lediglich von einer übergeordneten, als Master arbeitenden Steuerung empfangene Auslösesignale weiterverarbeitet und den Leitfähigkeitssensor zu einer Messung aktiviert. Sie kann aber auch selbst entsprechende Programmabläufe programmiert enthalten und von sich aus nach bestimmten Vorgaben, zum Beispiel anhand vorgegebener Zeitintervalle, Messungen des Leitfähigkeitssensors auslösen und entsprechende Messwerte verarbeiten und/oder an eine Zentrale übermitteln.

Weitere Vorteile und Merkmale der Erfindung werden noch einmal deutlich anhand der nachstehende Beschreibung eines Ausführungsbeispiels unter Verweis auf die beigefügten Figuren. Dabei zeigen:
- Fig. 1: eine dreidimensionale Ansicht eines erfindungsgemäßen Sprinklerkopfs;
- Fig. 2: eine Seitenansicht des Sprinklerkopfs aus Fig. 1;
- Fig. 3: eine entlang der Schnittlinie A-A gemäß Fig. 2 genommene Schnittansicht des Sprinklerkopfs aus Fig. 1; und
- Fig. 4: eine vergrößerte Darstellung des in Fig. 3 mit B bezeichneten Ausschnitts.

In den Figuren ist schematisch in verschiedenen Ansichten ein Sprinklerkopf 1 dargestellt, der in erfindungsgemäßer Weise mit einem Leitfähigkeitssensor zum Messen der elektrischen Leitfähigkeit von in einer Sprinkleranlage befindlichem Löschwasser ausgerüstet ist und der entsprechend für die Durchführung des erfindungsgemäßen Verfahrens eingesetzt werden kann. Der in den Figuren gezeigte Sprinklerkopf 1 ist dabei nur ein mögliches Beispiel einer Ausgestaltung eines Sprinklerkopfs, der in erfindungsgemäßer Weise mit einem Leitfähigkeitssensor versehen bzw. ausgerüstet ist. Insoweit sind die gezeigten Details des Sprinklerkopfs lediglich als mögliche Ausgestaltung zu verstehen, ist für den Fachmann klar, dass er grundsätzlich alle möglichen, an sich bekannten Ausführungsformen von Sprinklerköpfen entsprechend der Erfindung mit einem Leitfähigkeitssensor versehen bzw. bestücken kann, um diesen in erfindungsgemäßer Weise zu gestalten.

Der in den Figuren gezeigte Sprinklerkopf 1 hat einen Verbindungsanschluss 2, der ein (hier nicht näher dargestelltes) Außengewinde aufweist, mit dem dieser Verbindungsanschluss 2 in ein ein entsprechendes Innengewinde aufweisendes Endstück eines Löschwasserrohrs einer Sprinkleranlage eingeschraubt werden kann, zum Festlegen des Sprinklerkopfs 1 an dem Löschwasserrohr. Im Innern des Verbindungsanschluss 2 ist ein Leitungsabschnitt 8 gebildet, in den hinein Löschwasser aus dem Löschwasserrohr der Sprinkleranlage, an dessen Ende der Sprinklerkopf 1 angeschlossen ist, einströmen kann. Der Leitungsabschnitt 8 wird von einem Verschlussstück 3 verschlossen. Über Verbindungsarme 4 ist mit dem Verbindungsanschluss 2 ein Widerlager 5 verbunden, welches in einem Abstand dem Verschlussstück 3 axial gegenüberliegt. Zwischen dem Widerlager 5 und dem Verschlussstück 3 ist ein thermisches Auslöseelement 6 angeordnet, welches das Verschlussstück 3 in dessen den Leitungsabschnitt 8 verschließenden Position hält.

In dem gezeigten Ausführungsbeispiel ist das Verschlussstück 3 als ein Federelement, nach Art einer Tellerfeder, gebildet, sodass mit dem Einbringen des thermischen Auslöseelements 6 zwischen dem Widerlager 5 und dem Verschlussstück 3 eine Spannkraft aufgebaut werden kann und durch die Federwirkung des Verschlussstück 3 auch bei zum Beispiel durch Temperaturänderungen bedingten Dimensionsänderungen das Verschlussstück 3 weiterhin durch das thermische Auslöseelement 6 sicher in der den Leitungsabschnitt 8 verschließenden Position gehalten wird. Es können in einer erfindungsgemäßen Umsetzung aber auch andere Gestaltungen des Verschlussstücks umgesetzt werden, wobei z.B. ein Federelement auch gesondert vorgesehen sein kann, wie es grundsätzlich aus dem Stand der Technik auch bekannt ist.

Das Widerlager 5 ist als eine in einer Aufnahme 14, die fest mit den Verbindungsarmen 4 verbunden ist, eingeschraubtes Element gebildet, sodass es durch Einschrauben in die Aufnahme 14 zum Einspannen des thermischen Auslöseelements 6 in Richtung des Verschlussstücks 3 bewegt werden kann, zum Entlasten in die andere Richtung herausgeschraubt werden kann.

An der Aufnahme 14 ist ein Verteilerteller 7 angeformt, der im Auslösefall des Sprinklerkopfs 1 in einer bekannten Weise eine Verteilung des durch den Leitungsabschnitt 8 dann austretenden Löschwassers bewirkt.

Das thermische Auslöseelement 6 ist in dem gezeigten Ausführungsbeispiel ein mit einer Auslöseflüssigkeit gefülltes sogenanntes Glasfässchen, wie es im Stand der Technik seit langem bekannt ist für die Realisierung entsprechender thermischer Auslöseelemente in Sprinklerköpfen. Es kann hier aber auch ein anderes thermisches Auslöseelement eingesetzt werden, zum Beispiel ein solches bestehend aus oder gebildet mit einem Schmelzmaterial, z.B. Schmelzlot, wie es ebenfalls im Stand der Technik gebräuchlich ist.

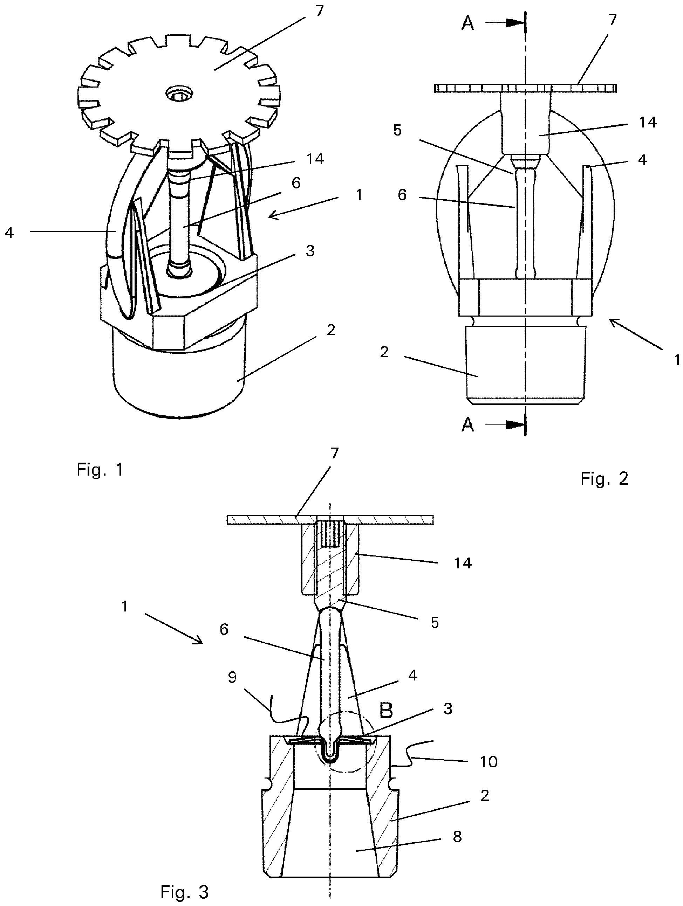

Wie in Figur 3 schematisch dargestellt ist, sind für die Realisierung eines Leitfähigkeitssensors das Verschlussstück 3, das aus einem elektrisch leitenden Material gebildet ist, zum Beispiel einem Stahl, und der Verbindungsanschluss 2, der ebenfalls aus einem elektrisch leitenden Material besteht, zum Beispiel aus Messing, über elektrische Kontakte 9, 10 elektrisch kontaktiert. Die elektrischen Kontakte 9, 10 sind (in der Figur nicht näher dargestellt) mit einem Sensorteil verbunden, über welches eine elektrische Spannung zwischen den Kontakten 9, 10 aufgebaut bzw. angelegt werden kann für die Messung einer Leitfähigkeit eines zwischen den Kontakten liegenden Mediums, insbesondere von in dem Leitungsabschnitt 8 stehendem Löschwasser.

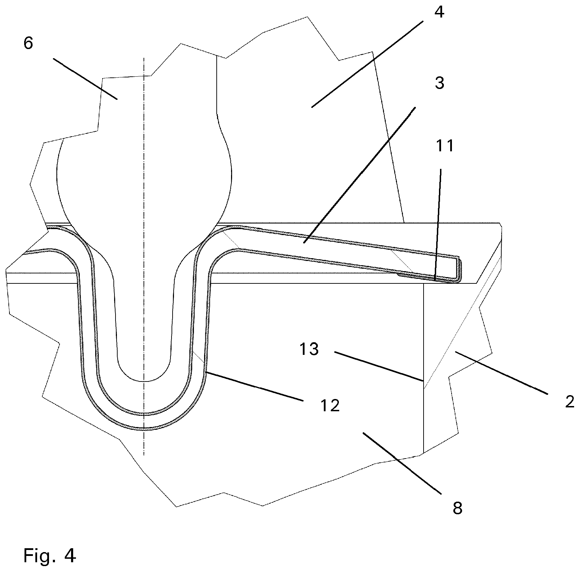

In Figur 4 ist noch einmal näher gezeigt, wie das Verschlussstück 3 den Leitungsabschnitt 8 abdichtend angeordnet ist. Insbesondere ist an einem Außenrand des Verschlussstücks 3, mit dem dieses auf einem Absatz des Verbindungsanschlusses 2 aufliegt, das Verschlussstück 3 gegenüber dem Verbindungsanschluss 2 mit einer Dichtung 11 abgedichtet. In Figur 4 ist diese Dichtung 11 als eine Beschichtung des Verschlussstücks 3 gezeigt. Hier kann aber auch eine andere Art der Dichtung vorgesehen sein, zum Beispiel ein dort eingelegter O-Ring oder dergleichen. Diese Dichtung 11, das ist für den hier gewählten Aufbau des Leitfähigkeitssensors relevant, besteht aus einem elektrisch nicht leitenden Material, sodass an dieser Kontaktstelle das Verschlussstück 3 gegenüber dem Verbindungsanschluss 2 galvanisch isoliert ist. Da auch das hier in Form eines Glasfässchen gebildete thermische Auslöseelement 6 elektrisch nicht leitend ist, ist auch an dieser Verbindungsstelle zwischen dem Verschlussstück 3 und dem Verbindungsanschluss 2 (verbunden über das thermische Auslöseelement, das Widerlager 5, die Aufnahme 14 und die Verbindungsarme 4) eine galvanische Isolierung erreicht. Entsprechend kann eine elektrische Leitung zwischen dem über den Kontakt 9 elektrisch kontaktierten Verschlussstück 3, das mit einer Oberfläche 12, an der das elektrisch leitende Material frei liegt, in Kontakt mit dem Innern des Leitungsabschnitts 8, bei in eine Sprinkleranlage integriertem Sprinklerkopf 1 also mit dort anstehendem Löschwasser, steht, und dem über den elektrischen Kontakt 10 kontaktierten Verbindungsanschluss 2, der an seiner Oberfläche 13 ebenfalls mit seinem elektrisch leitenden Material exponiert liegt und damit im Montagezustand des Sprinklerkopfs 1 in der Sprinkleranlage mit dem in dem Leitungsabschnitt 8 anstehenden Löschwasser in Kontakt steht, nur über das Löschwasser zustande kommen. Wird nun also eine Spannung zwischen den elektrischen Kontakten 9 und 10 angelegt, so kommt es zu einer elektrischen Leitung auch über das in dem Leitungsabschnitt 8 stehende Löschwasser, wobei der bei einer vorgegebenen Spannung erzielte Stromfluss in dem so gebildeten Stromkreis von der Leitfähigkeit des Löschwassers 8 abhängt, sodass der gemessene Wert des Stroms ein Maß für die Leitfähigkeit (entsprechend auch den elektrischen Widerstand, der ebenfalls als Kenngröße für die Löschwasserqualität herangezogen werden kann) des Löschwassers ist. Für den entsprechenden Betrieb der so gebildeten Sensorik und für eine Weitergabe der Messdaten an eine Zentrale sind entsprechende, in den Figuren nicht näher dargestellte Einrichtungen an dem erfindungsgemäßen Sprinklerkopf 1 vorgesehen, zum Beispiel auf einer hier nicht näher dargestellten, an dem Sprinklerkopf 1 angeordneten Platine, die dann zum Beispiel auch einen Funksender zum drahtlosen Übertragen von Messdaten aufweisen kann oder aber ein Daten- und einen elektrischen Versorgungskabelanschluss für die Versorgung mit einer elektrischen Spannung zum Betrieb insbesondere auch des wie vorstehend erläutert gebildeten Leitfähigkeitssensors.

Wenn ein Kabelanschluss unterbleiben soll, so ist an dem erfindungsgemäßen Sprinklerkopf 1, zum Beispiel auf der wie vorstehend erwähnten Platine, auch eine Quelle für elektrische Energie angeordnet, zum Beispiel eine Batterie oder einen Akkumulator. In diesem Fall kann eine an dem Sprinklerkopf 1 vorgesehene Steuerung, die Messungen des Leitfähigkeitssensors koordiniert und die erhaltenen Messwerte gegebenenfalls weiterverarbeitet, jedenfalls übermittelt, auch eine Einrichtung beinhalten, die ein Signal ausgibt, wenn die elektrische Energieversorgung erschöpft ist oder unterhalb eines als Reserve aufgefassten Schwellwert der gespeicherten Energiemenge fällt.

Mit dem erfindungsgemäßen und in den Figuren gezeigten Sprinklerkopf 1 kann nun, zum Beispiel kontinuierlich oder in hinsichtlich der zeitlichen Abfolge vorgegebenen Messintervallen eine Bestimmung der Leitfähigkeit des in dem Leitungsabschnitt 8 anliegenden Löschwassers durchgeführt werden, um dann anhand der so bestimmten Leitfähigkeit und/oder deren Veränderung die Qualität des Löschwassers abzuschätzen. In einer Auswertung kann dann zum Beispiel eine Warnung erfolgen, wenn das Löschwasser als in seiner Qualität in einer solchen Weise beeinträchtigt erkannt wurde, dass es behandelt oder ausgetauscht werden muss, um Beeinträchtigungen der Funktion der Sprinkleranlage zu vermeiden oder solchen vorzubeugen.

### Bezugszeichen

- 1: Sprinklerkopf
- 2: Verbindungsanschluss
- 3: Verschlussstück
- 4: Verbindungsarm
- 5: Widerlager
- 6: thermisches Auslöseelement
- 7: Verteilerteller
- 8: Leitungsabschnitt
- 9: elektrischer Kontakt
- 10: elektrischer Kontakt
- 11: Dichtung
- 12: Oberfläche
- 13: Oberfläche
- 14: Aufnahme

## Patentansprüche

1. Verfahren zur Überwachung der Löschwasserqualität von in einer Sprinkleranlage befindlichem Löschwasser, bei dem eine Messung der elektrischen Leitfähigkeit des in der Sprinkleranlage befindlichen Löschwassers durchgeführt und aus einem gemessenen Leitfähigkeitswert auf eine Qualität und/oder Qualitätsveränderung des Löschwassers geschlossen wird, **dadurch gekennzeichnet, dass** die Messung der elektrischen Leitfähigkeit des Löschwassers an wenigstens einem an eine Löschwasserleitung der Sprinkleranlage angeschlossenen Sprinklerkopf durchgeführt wird.

2. Verfahren nach Anspruch 1, **dadurch gekennzeichnet, dass** einen gemessenen Leitfähigkeitswert repräsentierende Daten von dem wenigstens einen Sprinklerkopf an eine Zentrale übermittelt werden.

3. Verfahren nach Anspruch 2, **dadurch gekennzeichnet, dass** die Übermittlung der Daten von dem Sprinklerkopf an die Zentrale in zumindest einem Übermittlungsabschnitt drahtlos erfolgt.

4. Verfahren nach einem der vorhergehenden Ansprüche, **dadurch gekennzeichnet, dass** für eine fortlaufende Überwachung der Löschwasserqualität die Messung der elektrischen Leitfähigkeit kontinuierlich oder in vorgegebenen Intervallen wiederholt durchgeführt wird.

5. Sprinklerkopf (1) für eine Sprinkleranlage mit einem einen Rohrabschnitt (8) aufweisenden Verbindungsanschluss (2) zum Verbinden mit einem freien Ende eines Löschwasserrohrs der Sprinkleranlage, einem Verschlussstück (3), welches in einer Schließstellung den Rohrabschnitt (8) und/oder das freie Ende des Löschwasserrohrs verschließt, um einen Austritt von Löschwasser aus dem Löschwasserrohr zu verhindern, in einer Offenstellung den Rohrabschnitt (8) und das freie Ende des Löschwasserrohrs freigibt, so dass Löschwasser aus dem Löschwasserrohr und durch den Sprinklerkopf (1) austreten kann, und mit einem thermischen Auslöseelement (6), das in einem Normalzustand das Verschlussstück (3) in der Schließstellung hält, bei einer Auslösetemperatur eine Bewegung des Verschlussstücks (3) in die Offenstellung erlaubt, **dadurch gekennzeichnet, dass** an dem Sprinklerkopf (1) in einem Bereich, in dem in einem mit dem freien Ende eines Löschwasserrohrs verbundenen Zustand des Sprinklerkopfs (1) Löschwasser ansteht, ein Leitfähigkeitssensor zum Messen der elektrischen Leitfähigkeit des Löschwassers vorgesehen ist.

6. Sprinklerkopf (1) nach Anspruch 5, **dadurch gekennzeichnet, dass** er eine mit dem Leitfähigkeitssensor verbundene Einrichtung zur drahtlosen Übermittlung von Messwerten des Leitfähigkeitssensors aufweist.

7. Sprinklerkopf (1) nach einem der Ansprüche 5 oder 6, **dadurch gekennzeichnet, dass** er eine elektrische Energiequelle aufweist.

8. Sprinklerkopf (1) nach einem der Ansprüche 5 bis 7, **dadurch gekennzeichnet, dass** er eine Steuereinheit aufweist, die dazu eingerichtet ist, den Leitfähigkeitssensor zur Durchführung einer Messung der elektrischen Leitfähigkeit des Löschwassers anzusteuern.

## Claims

1. A method for monitoring the quality of fire-fighting water of fire-fighting water located in a sprinkler system, in which a measurement of the electrical conductivity of the fire-fighting water located in the sprinkler system is carried out and a quality and/or quality change of the fire-fighting water is concluded from a measured - conductivity value, **characterised in that** the measurement of the electrical conductivity of the fire-fighting water is carried out at at least one sprinkler head connected to an fire-fighting water line of the sprinkler system.

2. The method according to claim 1, **characterised in that** data representing a measured conductivity value is transmitted from the at least one sprinkler head to a control centre.

3. The method according to claim 2, **characterised in that** the transmission of the data from the sprinkler head to the control centre takes place wirelessly in at least one transmission section.

4. The method according to one of the preceding claims, **characterised in that** for continuous monitoring of the quality of fire-fighting water, the measurement of the electrical conductivity is carried out continuously or repeatedly at predetermined intervals.

5. A sprinkler head (1) for a sprinkler system, with a connection fitting (2) having a pipe section (8) for connection to a free end of an fire-fighting water pipe of the sprinkler system, a closure piece (3) which, in a closed position, closes the pipe section (8) and/or the free end of the fire-fighting water pipe, to prevent fire-fighting water from leaking from the fire-fighting water pipe, in an open position releases the pipe section (8) and the free end of the fire-fighting water pipe so that fire-fighting water can escape from the fire-fighting water pipe and through the sprinkler head (1), and with a thermal release element (6) which, in a normal state, holds the closure piece (3) in the closed position, but allows movement of the closure piece (3) into the open position at a release temperature, **characterised in that** a conductivity sensor for measuring the electrical conductivity of the fire-fighting water is provided on the sprinkler head (1) in a region in which fire-fighting water is present in a state of the sprinkler head (1) connected to the free end of an fire-fighting water pipe.

6. The sprinkler head (1) according to claim 5, **characterised in that** it comprises a device connected to the conductivity sensor for wireless transmission of measured values of the conductivity sensor.

7. The sprinkler head (1) according to one of claims 5 or 6, **characterised in that** it comprises an electrical power source.

8. The sprinkler head (1) according to any one of claims 5 to 7, **characterised in that** it comprises a control unit which is arranged to control the conductivity sensor to perform a measurement of the electrical conductivity of the fire-fighting water.

## Revendications

1. Procédé de contrôle de la qualité de l'eau d'extinction dans un système d'extinction, dans lequel une mesure de la conductivité électrique de l'eau d'extinction se trouvant dans le système d'extinction est effectuée et une qualité et/ou un changement de qualité de l'eau d'extinction est déterminé à partir d'une valeur de conductivité mesurée, **caractérisé en ce que** la mesure de la conductivité électrique de l'eau d'extinction est effectuée au niveau d'au moins une tête de sprinkler reliée à une conduite d'eau d'extinction du système d'extinction.

2. Procédé selon la revendication 1, **caractérisé en ce que** des données représentant une valeur de conductivité mesurée sont transmises de ladite au moins une tête de sprinkler à un centre de contrôle.

3. Procédé selon la revendication 2, **caractérisé en ce que** la transmission des données de la tête de sprinkler au centre de contrôle a lieu sans fil dans au moins une section de transmission.

4. Procédé selon l'une des revendications précédentes, **caractérisé en ce que** pour permettre le contrôle continu de la qualité de l'eau d'extinction, la mesure de la conductivité électrique est effectuée en continu ou de manière répétée à des intervalles prédéterminés.

5. Tête de sprinkler (1) pour un système d'extinction, avec un raccord de connexion (2) ayant une section de tuyau (8) pour la connexion à une extrémité libre d'un tuyau d'eau d'extinction du système d'extinction, une pièce de fermeture (3) qui, en position fermée, ferme la section de tuyau (8) et/ou l'extrémité libre du tuyau d'eau d'extinction, pour empêcher l'eau d'extinction de fuir du tuyau d'eau d'extinction, dans une position ouverte, libère la section de tuyau (8) et l'extrémité libre du tuyau d'eau d'extinction de sorte que l'eau d'extinction peut s'échapper du tuyau d'eau d'extinction et à travers la tête de sprinkler (1), et avec un élément de déclenchement thermique (6) qui, en condition normale, maintient la pièce de fermeture (3) dans la position fermée, mais qui permet le mouvement de la pièce de fermeture (3) dans la position ouverte à une température de déclenchement, **caractérisé en ce qu'**un capteur de conductivité pour mesurer la conductivité électrique de l'eau d'extinction est prévu sur la tête de sprinkler (1) dans une zone dans laquelle l'eau d'extinction est présente dans un état de la tête de sprinkler (1) connectée à l'extrémité libre d'un tuyau d'eau d'extinction.

6. Tête de sprinkler (1) selon la revendication 5, **caractérisée en ce qu'**elle comprend un dispositif connecté au capteur de conductivité pour la transmission sans fil des valeurs mesurées du capteur de conductivité.

7. Tête de sprinkler (1) selon l'une des revendications 5 ou 6, **caractérisée en ce qu'**elle comprend une source d'énergie électrique.

8. Tête de sprinkler (1) selon l'une quelconque des revendications 5 à 7, **caractérisée en ce qu'**elle comprend une unité de commande qui est agencée pour commander le capteur de conductivité afin de réaliser une mesure de la conductivité électrique de l'eau d'extinction.
